# EUROPÄISCHE PATENTANMELDUNG

(11) **EP 3 579 064 A1**
(43) Veröffentlichungstag der Anmeldung: **11.12.2019**
(21) Anmeldenummer: 19171605.9
(22) Anmeldetag: 29.04.2019
(51) Int. Cl.: G05B 19/042, G05B 19/05, G06F 9/451

(54) **ANORDNUNG UND VERFAHREN ZUM MESSEN VON SENORWERTEN UND/ODER STEUERN EINES DIESBEZÜGLICHEN AKTUATORS**

(30) Priorität: 05.06.2018 AT 504472018
(71) Anmelder: B & D Buchta und Degeorgi Mechatronik GmbH, 2500 Sooss (AT)
(72) Erfinder: Buchta, Peter, 2500 Sooß (AT)
(74) Vertreter: Wildhack & Jellinek

(57) **Zusammenfassung**

Die Erfindung betrifft eine Anordnung (10) sowie ein Verfahren zum Messen von Sensorwerten und/oder Steuern eines diesbezüglichen Aktuators umfassend ein Gehäuse (1) in dem einer Rechnereinheit (2) und eine mit der Rechnereinheit (2) verbundene Steuerungseinheit (3) untergebracht sind.

Erfindungsgemäß ist die Rechnereinheit (2) ein Betriebssystem, eine Programmierumgebung (22) zur Programmierung der Steuerungseinheit (3), einen Remote Desktop Server (23) mit einem Graphikprozessor und einen Netzwerkanschluss für den Remote Desktop Server (23) umfasst und dazu ausgebildet ist, über den Remote Desktop Server (23) Zugriff auf die Programmierumgebung (22) zu gewähren und ein darin erstelltes Programm (4) an die Steuerungseinheit (3) zu übermitteln, und
wobei die Steuerungseinheit (3) mit der Rechnereinheit (2) in Datenkommunikation steht und einen von der Rechnereinheit (2) programmierbaren Prozessor (32) und einen Steuerausgang zum Verschicken von Steuerimpulsen und/oder Empfangen von Messsignalen umfasst und dazu ausgebildet ist, das von der Rechnereinheit (2) übermittelte Programm (4) zu empfangen und einen an die Steuerungseinheit (3) angeschlossenen Aktuator entsprechend dieses Programms (4) zu steuern.

## Beschreibung

Die Erfindung betrifft eine Anordnung zum, insbesondere speicherprogrammierten, Messen von Sensorwerten und/oder Steuern eines diesbezüglichen Aktuators gemäß Patentanspruch 1 sowie ein Verfahren zur Programmierung einer derartigen Anordnung gemäß Patentanspruch 7.

Aus dem Stand der Technik sind Anordnungen zum, insbesondere speicherprogrammierten, Messen von Sensorwerten und/oder Steuern von Aktuatoren, wie z. B. speicherprogrammierbare Steuerungen, bekannt, die zur Steuerung oder Regelung von Maschinen oder Anlagen eingesetzt und auf die digitaler Basis programmiert werden. Zur Programmierung einer derartigen, aus dem Stand der Technik bekannten, Anordnung bedarf es üblicherweise einer externen Programmiersoftware, die beispielsweise auf einem Notebook installiert ist. Mit Hilfe dieser Programmiersoftware werden die Mess- und Steuerungsprogramme für die Anordnung erstellt, kompiliert und schließlich in die Anordnung hinuntergeladen.

Die derartige Programmierung einer Mess- und Steuerungsanordnung ist beispielsweise während der Inbetriebnahme einer industriellen Anlage im Rahmen der Errichtung und Montage problemlos möglich, wenn die Programmierung nur von einer Person vorgenommen wird. Bei den bekannten Anordnungen treten jedoch Probleme auf, wenn mehrere Personen, insbesondere mit verschiedenen Rechnern, zu unterschiedlichen Zeiten Programmierungen der Anlage durchführen, da beispielsweise Kollisionen bei den Versionsständen der Mess- und Steuerungsprogramme auftreten können.

Probleme treten bei bekannten Anordnungen auch dann auf, wenn nach einem längeren Zeitraum, beispielsweise nach mehreren Jahren, eine Änderung der programmierten Mess- und Steuerungsprogramme erforderlich ist, beispielsweise weil ein Umbau einer Anlage erfolgt oder eine Neuprogrammierung notwendig ist. In diesem Fall ist eine lückenlose Dokumentation und Nachvollziehung der Versionsstände meist problematisch bzw. treten bei Verwendung aktualisierter Programmiersoftware Probleme auf, da diese u. U. beispielsweise mehrere Jahre alte Mess- und Steuerungsprogramme nicht mehr fehlerfrei lesen und kompilieren kann. Dies kann sogar soweit führen, dass Anlagen nicht mehr programmiert werden können, wenn beispielsweise das Unternehmen, das zuvor die Mess- und Regelungsprogramme für die Steuerung der Anlage programmiert hat, nicht mehr existiert oder eine derartige Programmierung nicht mehr anbietet.

Um diesbezüglich Abhilfe zu schaffen, ist die Aufgabe der Erfindung daher, eine Anordnung zum Messen und/oder Steuern zur Verfügung zu stellen, für deren Programmierung keine externe Programmierumgebung notwendig ist.

Die Erfindung löst diese Aufgabe bei einer Anordnung zum, insbesondere speicherprogrammierten, Messen von Sensorwerten und/oder Steuern eines diesbezüglichen Aktuators mit den Merkmalen des Patentanspruchs 1. Erfindungsgemäß sind dabei ein Gehäuse in dem einer Rechnereinheit und eine mit der Rechnereinheit verbundene Steuerungseinheit untergebracht sind, vorgesehen,
wobei die Rechnereinheit ein Betriebssystem, eine Programmierumgebung zur Programmierung der Steuerungseinheit, einen Remote Desktop Server mit einem Graphikprozessor und einen Netzwerkanschluss für den Remote Desktop Server umfasst und dazu ausgebildet ist, über den Remote Desktop Server Zugriff auf die Programmierumgebung zu gewähren und ein darin erstelltes Programm an die Steuerungseinheit zu übermitteln, und
wobei die Steuerungseinheit mit der Rechnereinheit in Datenkommunikation steht und einen von der Rechnereinheit programmierbaren Prozessor und einen Steuerausgang zum Verschicken von Steuerimpulsen und/oder Empfangen von Messsignalen umfasst und dazu ausgebildet ist, das von der Rechnereinheit übermittelte Programm zu empfangen und einen an die Steuerungseinheit angeschlossenen Aktuator entsprechend dieses Programms zu steuern.

Zur Erhöhung der Prozesssicherheit und Abwehren von unerwünschten Zugriffen kann vorgesehen sein, dass in der Rechnereinheit und in der Steuerungseinheit jeweils ein Switch angeordnet ist, wobei die Switches insbesondere als Gateway und/oder Router und/oder Firewall einsetzbar sind, und
wobei die Datenkommunikationsverbindung zwischen der Rechnereinheit und der Steuerungseinheit, insbesondere ausschließlich, über eine interne Netzwerkverbindung zwischen den Switches hergestellt ist.

Um zu gewährleisten, dass bereits erstellte Programme oder Informationen auf die Anordnung übertragen und die Steuerungseinheit dementsprechend angesteuert werden kann, kann vorgesehen sein, dass die Rechnereinheit ein Steuerungsprogramm mit einer Benutzerschnittstelle umfasst, wobei die Rechnereinheit dazu ausgebildet ist, über den Remote Desktop Server einen Zugriff auf das Steuerungsprogramm herzustellen und Informationen, insbesondere Programme, an das Steuerungsprogramm der Rechnereinheit zu übertragen, und wobei die Rechnereinheit dazu ausgebildet ist, den Prozessor der Steuerungseinheit entsprechend der übermittelten Informationen, insbesondere Programme, anzusteuern.

Um einem Benutzer einer erfindungsgemäßen Anordnung zu ermöglichen, beispielsweise mittels Bedienfeldern Programme oder Programmparameter zu ändern oder graphische Informationen betreffend den zu steuernden Aktuator anzuzeigen, kann vorgesehen sein, dass auf der Rechnereinheit weitere Programme ablaufen, die eine graphische Benutzerschnittstelle aufweisen, wobei der Remote Desktop Server der Rechnereinheit dazu ausgebildet ist, Zugriff auf die graphische Benutzerschnittstelle herzustellen, insbesondere ein Anlagenbild und/oder ein Bedienfeld zur Verfügung zu stellen.

Dass der Prozessor der Steuerungseinheit auch programmiert werden kann, wenn beispielsweise die Rechnereinheit defekt ist, kann dadurch gewährleistet werden, dass im Fall, dass die Rechnereinheit defekt ist und/oder das Betriebssystem und/oder die Programmierumgebung der Rechnereinheit nicht ausführbar sind, der Switch der Steuerungseinheit dazu ausgebildet ist, unmittelbaren Zugriff auf die Steuerungseinheit herzustellen, sodass der Prozessor der Steuerungseinheit über eine, insbesondere auf einem Datenkommunikationsgerät außerhalb des Gehäuses vorhandene, externe Programmierumgebung programmierbar ist.

Um einen Zugriff auf die Steuerungseinheit zu gewährleisten, im Fall dass beispielsweise die Rechnereinheit defekt ist, kann vorgesehen sein, dass die Anordnung dazu ausgebildet ist, insbesondere über ein Netzwerk erfolgende, Zugriffe auf die Steuerungseinheit über den Switch der Rechnereinheit an die Steuerungseinheit weiterzuleiten und
im Fall, dass die Rechnereinheit und/oder der Switch der Rechnereinheit defekt ist, insbesondere über ein Netzwerk erfolgende, Zugriffe auf die Steuerungseinheit auf den Switch der Steuerungseinheit umzuleiten.

Erfindungsgemäß ist weiters ein Verfahren zur Programmierung einer Anordnung zum, insbesondere speicherprogrammierten, Messen von Sensorwerten und/oder Steuern eines diesbezüglichen Aktuators vorgesehen, wobei
- mittels eines Remote Desktop Clients Zugriff auf den Remote Desktop Server der Rechnereinheit hergestellt wird,
- über den Remote Desktop Client mittels des Remote Desktop Servers ein Programm für die Steuerungseinheit in der Programmierumgebung der Rechnereinheit erstellt wird, und
- das derart erstellte Programm, insbesondere über eine interne Netzwerkverbindung, vorzugsweise ausschließlich über eine interne Netzwerkverbindung, an die Steuerungseinheit übermittelt wird.

Um zu gewährleisten, dass bereits erstellte Programme zur Programmierung des Prozesses der Steuerungseinheit verwendet werden können, kann vorgesehen sein, dass
- über den Remote Desktop Server ein Zugriff auf ein Steuerungsprogramm der Rechnereinheit hergestellt wird,
- Informationen, insbesondere Programme, an das Steuerungsprogramm der Rechnereinheit übertragen werden, und
- der Prozessor der Steuerungseinheit entsprechend der übermittelten Informationen, insbesondere Programme, von der Rechnereinheit angesteuert wird.

Dass der Prozessor der Steuereinheit auch programmiert werden kann, wenn beispielsweise die Rechnereinheit defekt ist, kann dadurch sichergestellt werden, dass im Fall, dass die Rechnereinheit defekt ist und/oder das Betriebssystem und/oder die Programmierumgebung der Rechnereinheit nicht ausführbar sind,
- mittels des Remote Desktop Servers unmittelbarer Zugriff auf die Steuerungseinheit hergestellt wird, und
- der Prozessor der Steuerungseinheit über eine, insbesondere auf einem Datenkommunikationsgerät außerhalb des Gehäuses vorhandene, externe Programmierumgebung programmiert wird.

Weitere Vorteile und Ausgestaltungen der Erfindung ergeben sich aus der Beschreibung und der beiliegenden Zeichnung.

Besonders vorteilhafte, aber nicht einschränkend zu verstehende Ausführungsbeispiele der Erfindung werden im Folgenden anhand der beiliegenden Zeichnung schematisch dargestellt und unter Bezugnahme auf die Zeichnung beispielhaft beschrieben.

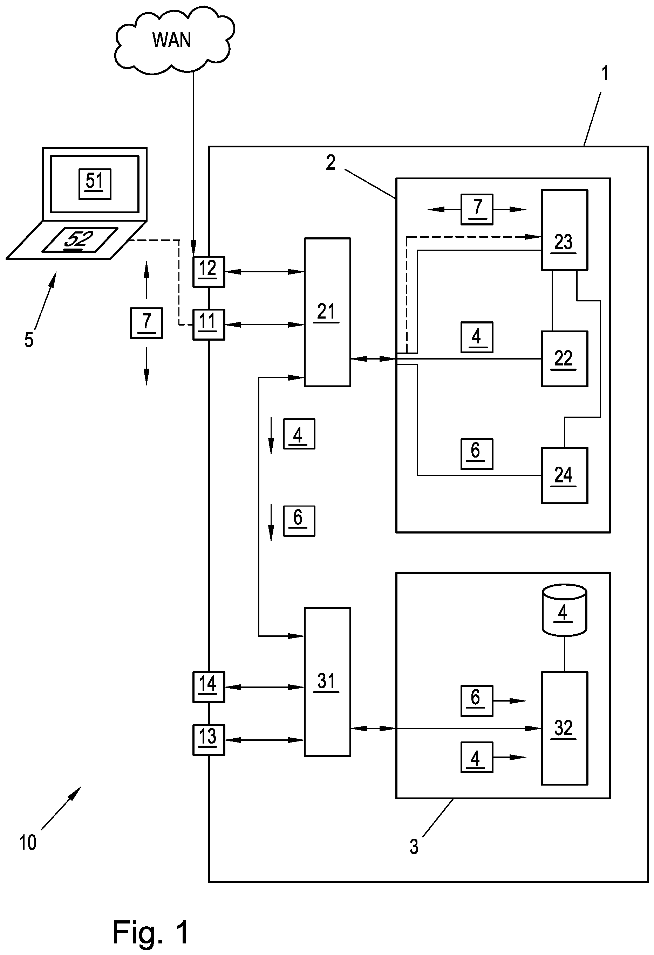

**Fig. 1** zeigt ein Ausführungsbeispiel einer erfindungsgemäßen Anordnung 10 zum Messen von Sensorwerten und/oder Steuern eines diesbezüglichen Aktuators. Die erfindungsgemäße Anordnung 10 umfasst dabei ein Gehäuse 1, in dem eine Rechnereinheit 2 und eine mit der Rechnereinheit 2 verbundene Steuerungseinheit 3 untergebracht sind. Die Rechnereinheit 2 umfasst dabei ein Betriebssystem, eine Programmierumgebung 22 zur Programmierung der Steuerungseinheit 3, einen Remote Desktop Server 23 mit einem Grafikprozessor und einen Netzwerkanschluss für den Remote Desktop Server 23.

Die Steuerungseinheit 3 steht mit der Rechnereinheit 2 in Datenkommunikation und umfasst einen von der Rechnereinheit 2 programmierbaren Prozessor 32 und einen Steuerausgang zum Verschicken von Steuerimpulsen und/oder Empfangen von Messsignalen.

Die Rechnereinheit 2 ist dazu ausgebildet, über den Remote Desktop Server 23 Zugriff auf die Programmierumgebung 22 zu gewähren und ein darin erstelltes Programm 4 an die Steuerungseinheit 3 zu übermitteln. Die Steuerungseinheit 3 ist wiederum dazu ausgebildet, das von der Rechnereinheit 2 übermittelte Programm 4 zu empfangen und an ihrem Steuerausgang entsprechend dieses Programms 4 Steuerimpulse an einen an die Steuerungseinheit 3 angeschlossenen Aktuator zu versenden. Dabei kann die Steuerungseinheit 3 entsprechend des übermittelten Programms 4 auch Messsignale von Sensoren empfangen, und entsprechend den Programminformationen für diese Sensorwerte einen angeschlossenen Aktuator steuern.

Die Ausgestaltung einer erfindungsgemäßen Anordnung zum Messen und/oder Steuern mit einer gemeinsam in einem Gehäuse 1 untergebrachten Rechnereinheit 2 und Steuerungseinheit 3 stellt vorteilhafterweise sicher, dass es keiner externen Programmierumgebung, die beispielsweise auf einem Notebook installiert ist, bedarf, um die Programme, entsprechend denen Aktuatoren von der Steuerungseinheit 3 gesteuert werden sollen, zu kompilieren und vom Notebook, bzw. einem externen Speicherort auf die Steuerungseinheit 3 zu laden.

Im Gegensatz dazu ist bei einer erfindungsgemäßen Rechnereinheit 2 die Programmierumgebung 22 bereits implementiert, sodass von einem beliebigen Ort aus nur beispielsweise mittels eines Remote Desktop Clients 51 Zugriff auf den Remote Desktop Server 23 der Rechnereinheit 2 hergestellt zu werden braucht, um über den Remote Desktop Client 51 mittels des Remote Desktop Servers 23 ein Programm 4 für die Steuerungseinheit 3 in der Programmierumgebung 22 der Rechnereinheit 2 zu erstellen.

Dies bedeutet, dass zu einer Neuprogrammierung bzw. Umprogrammierung der Steuerungseinheit 3 kein Techniker mit beispielsweise einem Laptop und einer darauf befindlichen Programmierumgebung mehr vor Ort sein muss, sondern ein Zugriff von einem Remote Desktop Client 51 auf den Remote Desktop Server 23 der Rechnereinheit 2 ausreicht, da die Programmierumgebung 22 bereits auf der Rechnereinheit 2 der Anordnung 10 vorhanden ist.

Dies bietet gegenüber bekannten Anordnungen zum Messen und/oder Steuern, die beispielsweise eine Programmierung der Steuerungseinheit mittels eines Webservers ermöglichen, den Vorteil, dass an Stelle des Webservers, der eine vorgegebene Programmiersprache wie beispielsweise HTML oder Java benötigt, jede Programmiersprache, die in der Programmierumgebung 22 der Rechnereinheit 2 lauffähig ist, verwendet werden kann.

Beim gezeigten Ausführungsbeispiel einer Anordnung 10 ist in der Rechnereinheit 2 und in der Steuerungseinheit 3 jeweils ein Switch 21, 31 angeordnet, wobei über eine interne Netzwerkverbindung zwischen den Switches 21, 31 die Datenkommunikationsverbindung zwischen der Rechnereinheit 2 und der Steuerungseinheit 3 hergestellt ist. So wird beispielsweise das in der Programmierumgebung 22 der Rechnereinheit 2 erstellte Programm 4 über die interne Netzwerkverbindung, vorzugsweise ausschließlich über die interne Netzwerkverbindung, zwischen des Switches 21, 31 an die Steuerungseinheit 3 übermittelt.

Die Steuerungseinheit 3 empfängt das von der Rechnereinheit 2 übermittelte Programm 4, sodass ein an die Steuerungseinheit 3 angeschlossener Aktuator dementsprechend angesteuert wird oder Messsignale von der Steuerungseinheit 3 empfangen werden.

Die Switches 21, 31 der Rechnereinheit 2 bzw. der Steuerungseinheit 3 können insbesondere als Gateway und/oder Router und/oder Firewall einsetzbar sein, sodass die Prozesssicherheit bei der Programmierung der Steuerungseinheit 3 bzw. der Versendung der Programme 4 von der Rechnereinheit 2 an die Steuerungseinheit 3 erhöht werden kann. Werden die Switches 21, 31 der Rechnereinheit 2 bzw. der Steuerungseinheit 3 beispielsweise als Gateway genutzt, so kann beispielsweise nur bestimmten Mac-Adressen ein Zugriff auf die Rechnereinheit 2 bzw. die Steuerungseinheit 3 erlaubt werden, sodass unerwünschte Zugriffe unterbunden werden.

Im gezeigten Ausführungsbeispiel umfasst die Rechnereinheit 2 ein Steuerungsprogramm 24 mit einer Benutzerschnittstelle und die Rechnereinheit 2 ist dazu ausgebildet, über den Remote Desktop Server 23 einen Zugriff auf das Steuerungsprogramm 24 herzustellen. So ist es vorteilhafterweise möglich, beispielsweise Informationen 6 oder Programme, die für Anordnungen 10 zum Messen und/oder Steuern für ähnliche oder dieselben Aktuatoren oder Sensoren zur Verfügung stehen oder erstellt wurden, an das Steuerungsprogramm 24 der Rechnereinheit 2 zu übertragen. Derart brauchen diesbezügliche Informationen 6 nicht erneut gesammelt werden oder Programme nicht erneut in der Programmierumgebung 22 der Rechnereinheit 2 erstellt werden.

Die Rechnereinheit 2 ist in diesem Fall dazu ausgebildet, den Prozessor 32 der Steuerungseinheit 3 entsprechend der übermittelten Informationen 6, insbesondere der übermittelten Programme, anzusteuern.

Zum Anschluss eines externen Datenkommunikationsgeräts 5, wie beispielsweise eines Laptops, umfasst die Anordnung 10 zum Messen und/oder Steuern in Fig. 1 einen diesbezüglichen ersten Anschluss 11. Im gezeigten Ausführungsbeispiel umfasst die Anordnung 10 zum Messen und/oder Steuern weiters einen zweiten Anschluss 12, über den die Anordnung 10 mittels des Switches 21 der Rechnereinheit 2 mit beispielsweise einem Netzwerk verbunden ist, sodass für z. B. das Betriebssystem, das Steuerungsprogramm 24 und/oder weitere auf der Rechnereinheit 2 ablaufende Programme Updates heruntergeladen werden können.

Die Anordnung 10 zum Messen und/oder Steuern umfasst in Fig. 1 weiters einen dritten Anschluss 13 und einen vierten Anschluss 14 über den weitere, nicht in Fig. 1 dargestellte, Anordnungen zum Messen und/oder Steuern bzw. Steuerungseinheiten miteinander verbunden werden können.

Optional ist weiters möglich, dass auf der Rechnereinheit 2 weitere Programme ablaufen, die beispielsweise eine grafische Benutzerschnittstelle aufweisen, wobei der Remote Desktop Server 23 der Rechnereinheit 2 dazu ausgebildet ist, Zugriff auf die grafische Benutzerschnittstelle herzustellen und insbesondere ein Anlagenbild und/oder ein Bedienfeld zur Verfügung zu stellen.

Bei den weiteren Programmen kann es sich beispielsweise um einen Protokollierer handeln, der beispielsweise die von der Steuerungseinheit 3 zur Steuerung eines angeschlossenen Aktuators abgegebenen Steuerungsbefehle protokolliert und/oder die am Steuerausgang der Steuerungseinheit 3 empfangenen Messsignale, die beispielsweise von an die Steuerungseinheit 3 angeschlossenen Messsensoren an die Steuerungseinheit 3 übermittelt werden, aufzeichnet.

Ist ein externes Datenkommunikationsgerät 5, bzw. der Laptop, mit einem Remote Desktop Client 51 ausgestattet, kann ein Zugriff auf die vom Protokollierer aufgezeichneten Protokollzeilen über den Remote Desktop Server 23 der Rechnereinheit 2 hergestellt werden, sodass ein Benutzer die Protokolle einsehen oder auch herunterladen kann.

Alternativ oder zusätzlich kann über die grafische Benutzerschnittstelle der Rechnereinheit 2 einem Benutzer auch ein Bedienfeld zur Verfügung gestellt werden, sodass über den Remote Desktop Server 23 mittels eines Remote Desktop Clients 51 beispielsweise Parameter oder Steuerungsbefehle im Bedienfeld eingegeben werden können.

Alternativ oder zusätzlich kann ein Benutzer durch einen Zugriff auf die grafische Benutzerschnittstelle der Rechnereinheit 2 sich auf einem externen Datenkommunikationsgerät 5 beispielsweise auch ein Anlagenbild des zu steuernden Aktuators beispielsweise auch mit zugehörigen mit der Steuerungseinheit 3 verbundenen Messsensoren anzeigen lassen, um beispielsweise den Zustand der Anlage zu überprüfen und eventuelle Störungen erkennen zu können.

Wie in **Fig. 1** dargestellt, können für die Kommunikation zwischen dem Remote Desktop Server 23 und dem Remote Desktop Client 51 beispielsweise Datenpakete 7 von dem externen Datenkommunikationsgerät 5 über den Switch 21 an die Rechnereinheit 2, bzw. Datenpakete 7 mit den gewünschten anzuzeigenden Informationen von der Rechnereinheit 2 an das externe Datenkommunikationsgerät 5 übermittelt werden.

Bei einer erfindungsgemäßen Anordnung 10 zum Messen und/oder Steuern kann vorteilhafterweise der Switch 31 der Steuerungseinheit 3 dazu ausgebildet sein, unmittelbaren Zugriff auf die Steuerungseinheit 3 von "außen" über den Switch 21 der Rechnereinheit 2 herzustellen. Diese Ausgestaltung der Switches 21, 31 der besonders vorteilhaft, wenn die Rechnereinheit 2 defekt ist und/oder das Betriebssystem und/oder die Programmierumgebung 22 der Rechnereinheit 2 nicht mehr ausführbar sind. In diesem Fall ist gewährleistet, dass mittels eines externen Datenkommunikationsgeräts 5 und dem Switch 31 der Steuerungseinheit 3 der Prozessor 32 der Steuerungseinheit 3 über eine insbesondere auf den Datenkommunikationsgerät 5 vorhandene externe Programmierumgebung 52 programmierbar ist.

Auf diese Weise ist auch sichergestellt, dass Programme 4 zum Messen und/oder Steuern an die Steuerungseinheit 3 bzw. den Prozessor 32 übermittelt werden können, selbst wenn die Rechnereinheit 2 nicht funktionstüchtig ist, sodass der Betrieb des an die Steuerungseinheit 3 angeschlossenen Aktuators nicht beeinträchtigt ist, bis die Rechnereinheit 2 wieder störungsfrei funktioniert.

Optional kann bei einer erfindungsgemäßen Anordnung 10 diese auch dazu ausgebildet sein, insbesondere über ein Netzwerk erfolgende, Zugriffe auf die Steuerungseinheit 3 über den Switch 21 der Rechnereinheit 2 an die Steuerungseinheit 3 weiterzuleiten. Dabei kann beispielsweise der Switch 31 der Steuerungseinheit 3 zwar mit einem Netzwerk verbunden sein, ein über dieses Netzwerk erfolgender Zugriff wird aber auf den Switch 21 der Rechnereinheit 2 umgeleitet und über den Switch 21 der Rechnereinheit 2 wird der Zugriff auf die Steuerungseinheit 3 hergestellt.

Bei einer derartigen vorteilhaften Ausgestaltung der Anordnung 10 ist diese dazu ausgebildet, falls die Rechnereinheit 2 und/oder der Switch 21 der Rechnereinheit 2 defekt sind, Zugriffe auf die Steuerungseinheit 3, die insbesondere über ein Netzwerk erfolgen, auf den Switch 31 der Steuerungseinheit 3 umzuleiten. Somit ist gewährleistet, dass ein Zugriff auf die Steuerungseinheit 3 auch im Fall erfolgen kann, dass die Rechnereinheit 2 defekt ist oder aufgrund eines defekten Switches 21 der Rechnereinheit 2 keine Zugriffe auf die Steuerungseinheit 3 hergestellt werden können.

Somit ist sichergestellt, dass die Steuerungseinheit 3 sowie ein an diese angeschlossener Aktuator extern angesteuert werden kann, selbst wenn die Rechnereinheit 2 funktionsuntüchtig ist. Weiters ist bei einer derartigen Ausgestaltung einer erfindungsgemäßen Anordnung 10 die Prozesssicherheit gewährleistet, da in diesem Fall Daten und/oder Anfragen den Switch 31 der Steuerungseinheit 3 passieren und von diesem blockiert werden können.

Optional kann bei einer erfindungsgemäßen Anordnung 10 die Rechnereinheit 2 auch über eine Vielzahl an Anschlüssen wie beispielsweise für einen Bildschirm, eine Tastatur, eine Maus und/oder einen externen Datenspeicher verfügen.

Eine erfindungsgemäße Steuerungseinheit 3 kann ebenso über eine Vielzahl von Anschlüssen wie beispielsweise einen oder mehrere digitale Ein- und Ausgänge und/oder analoge Ein- und Ausgänge umfassen, über die Aktuatoren und/oder Messsensoren an die Steuerungseinheit 3 angeschlossen sind und Steuerungsimpulse empfangen und/oder Sensor-Messwerte an die Steuerungseinheit 3 übermitteln. Die Steuerungseinheit 3 kann auch zumindest ein Bussystem zur Datenübertragung und/oder zur Ansteuerung von Aktuatoren wie beispielsweise einen Feldbus aufweisen.

## Patentansprüche

1. Anordnung (10) zum, insbesondere speicherprogrammierten, Messen von Sensorwerten und/oder Steuern eines diesbezüglichen Aktuators umfassend ein Gehäuse (1) in dem einer Rechnereinheit (2) und eine mit der Rechnereinheit (2) verbundene Steuerungseinheit (3) untergebracht sind,
wobei die Rechnereinheit (2) ein Betriebssystem, eine Programmierumgebung (22) zur Programmierung der Steuerungseinheit (3), einen Remote Desktop Server (23) mit einem Graphikprozessor und einen Netzwerkanschluss für den Remote Desktop Server (23) umfasst und dazu ausgebildet ist, über den Remote Desktop Server (23) Zugriff auf die Programmierumgebung (22) zu gewähren und ein darin erstelltes Programm (4) an die Steuerungseinheit (3) zu übermitteln, und
wobei die Steuerungseinheit (3) mit der Rechnereinheit (2) in Datenkommunikation steht und einen von der Rechnereinheit (2) programmierbaren Prozessor (32) und einen Steuerausgang zum Verschicken von Steuerimpulsen und/oder Empfangen von Messsignalen umfasst und dazu ausgebildet ist, das von der Rechnereinheit (2) übermittelte Programm (4) zu empfangen und einen an die Steuerungseinheit (3) angeschlossenen Aktuator entsprechend dieses Programms (4) zu steuern.

2. Anordnung (10) nach Anspruch 1, **dadurch gekennzeichnet, dass** in der Rechnereinheit (2) und in der Steuerungseinheit (3) jeweils ein Switch (21, 31) angeordnet ist, wobei die Switches (21, 31) insbesondere als Gateway und/oder Router und/oder Firewall einsetzbar sind, und
wobei die Datenkommunikationsverbindung zwischen der Rechnereinheit (2) und der Steuerungseinheit (3), insbesondere ausschließlich, über eine interne Netzwerkverbindung zwischen den Switches (21, 31) hergestellt ist.

3. Anordnung (10) nach Anspruch 1 oder 2, **dadurch gekennzeichnet, dass** die Rechnereinheit (2) ein Steuerungsprogramm (24) mit einer Benutzerschnittstelle umfasst, wobei die Rechnereinheit (2) dazu ausgebildet ist, über den Remote Desktop Server (23) einen Zugriff auf das Steuerungsprogramm (24) herzustellen und Informationen (6), insbesondere Programme, an das Steuerungsprogramm (24) der Rechnereinheit (2) zu übertragen, und
wobei die Rechnereinheit (2) dazu ausgebildet ist, den Prozessor (32) der Steuerungseinheit (3) entsprechend der übermittelten Informationen (6), insbesondere Programme, anzusteuern.

4. Anordnung (10) nach einem der Ansprüche 1 bis 3, **dadurch gekennzeichnet, dass** auf der Rechnereinheit (2) weitere Programme ablaufen, die eine graphische Benutzerschnittstelle aufweisen, wobei der Remote Desktop Server (23) der Rechnereinheit (2) dazu ausgebildet ist, Zugriff auf die graphische Benutzerschnittstelle herzustellen, insbesondere ein Anlagenbild und/oder ein Bedienfeld zur Verfügung zu stellen.

5. Anordnung (10) nach einem der Ansprüche 2 bis 4, **dadurch gekennzeichnet, dass** im Fall, dass die Rechnereinheit (2) defekt ist und/oder das Betriebssystem und/oder die Programmierumgebung (22) der Rechnereinheit (2) nicht ausführbar sind, der Switch (31) der Steuerungseinheit (3) dazu ausgebildet ist, unmittelbaren Zugriff auf die Steuerungseinheit (3) herzustellen, sodass der Prozessor (32) der Steuerungseinheit (3) über eine, insbesondere auf einem Datenkommunikationsgerät (5) außerhalb des Gehäuses (1) vorhandene, externe Programmierumgebung (52) programmierbar ist.

6. Anordnung (10) nach einem der Ansprüche 2 bis 5, **dadurch gekennzeichnet, dass** die Anordnung (10) dazu ausgebildet ist, insbesondere über ein Netzwerk erfolgende, Zugriffe auf die Steuerungseinheit (3) über den Switch (21) der Rechnereinheit (2) an die Steuerungseinheit (3) weiterzuleiten und
im Fall, dass die Rechnereinheit (2) und/oder der Switch (21) der Rechnereinheit (2) defekt ist, insbesondere über ein Netzwerk erfolgende, Zugriffe auf die Steuerungseinheit (3) auf den Switch (31) der Steuerungseinheit (3) umzuleiten.

7. Verfahren zur Programmierung einer Anordnung (10) zum, insbesondere speicherprogrammierten, Messen von Sensorwerten und/oder Steuern eines diesbezüglichen Aktuators, wobei die Anordnung (10) insbesondere nach einem der Ansprüche 1 bis 6 ausgebildet ist, wobei
- mittels eines Remote Desktop Clients (51) Zugriff auf den Remote Desktop Server (23) der Rechnereinheit (2) hergestellt wird,
- über den Remote Desktop Client (51) mittels des Remote Desktop Servers (23) ein Programm (4) für die Steuerungseinheit (3) in der Programmierumgebung (22) der Rechnereinheit (2) erstellt wird, und
- das derart erstellte Programm (4), insbesondere über eine interne Netzwerkverbindung, vorzugsweise ausschließlich über eine interne Netzwerkverbindung, an die Steuerungseinheit (3) übermittelt wird.

8. Verfahren nach Anspruch 7, **dadurch gekennzeichnet, dass**
- über den Remote Desktop Server (23) ein Zugriff auf ein Steuerungsprogramm (24) der Rechnereinheit (2) hergestellt wird,
- Informationen, insbesondere Programme (4), an das Steuerungsprogramm (24) der Rechnereinheit (2) übertragen werden, und
- der Prozessor (32) der Steuerungseinheit (3) entsprechend der übermittelten Informationen, insbesondere Programme (4), von der Rechnereinheit (2) angesteuert wird.

9. Verfahren nach einem der Ansprüche 7 oder 8, **dadurch gekennzeichnet, dass**, im Fall, dass die Rechnereinheit (2) defekt ist und/oder das Betriebssystem und/oder die Programmierumgebung (22) der Rechnereinheit (2) nicht ausführbar sind,
- mittels des Remote Desktop Servers (23) unmittelbarer Zugriff auf die Steuerungseinheit (3) hergestellt wird, und
- der Prozessor (32) der Steuerungseinheit (3) über eine, insbesondere auf einem Datenkommunikationsgerät (5) außerhalb des Gehäuses (1) vorhandene, externe Programmierumgebung (52) programmiert wird.
